(19) Europäisches Patentamt
European Patent Office
Office européen des brevets

(11) **EP 2 796 984 A1**

(12) **EUROPEAN PATENT APPLICATION**

(43) Date of publication:
**29.10.2014 Bulletin 2014/44**

(51) Int Cl.:
**G06F 3/06** (2006.01)

(21) Application number: **14165383.2**

(22) Date of filing: **22.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.04.2013 JP 2013090128**

(71) Applicant: **FUJITSU LIMITED**
**Kawasaki-shi,**
**Kanagawa 211-8588 (JP)**

(72) Inventors:
• **Watanabe, Sugio**
  **Kanagawa, 211-8588 (JP)**
• **Shiomi, Hiroshi**
  **Kanagawa, 211-8588 (JP)**
• **Sakagami, Yuichi**
  **Kanagawa, 211-8588 (JP)**
• **Hiyoshi, Kenji**
  **Kanagawa, 211-8588 (JP)**
• **Sasaki, Tomoaki**
  **Kanagawa, 211-8588 (JP)**

(74) Representative: **HOFFMANN EITLE**
**Patent- und Rechtsanwälte**
**Arabellastrasse 4**
**81925 München (DE)**

(54) **Control system, control apparatus, and control program**

(57)    A control system includes: a superordinate apparatus (50) that includes a multi-path driver (52) controlling an access path; and a second control unit (10-1) that transmits a control signal used for an instruction for setting an access path to a first control unit (10-3) that is newly connected to be communicable with the superordinate apparatus (50) to the superordinate apparatus (50). The multi-path driver (52) sets the access path to the first control unit (10-3) based on the control signal supplied from the second control unit (10-1), thereby autonomously setting the access path in a case where a control unit is additionally installed.

FIG. 1

**Description**

FIELD

The embodiment discussed herein is directed to a control system, a control apparatus, and a control program.

BACKGROUND

In storage systems, techniques called scale-up or scale-out for improving the extensibility are known.

The scale-up technique extends the scale of the system by installing a constituent element of storage, a controller, a cache memory, a port, a disk, and the like. The scale-out technique extends the scale of the system by connecting a plurality of storage devices each including a storage unit and a control unit together.

In a case where a control unit is additionally installed in a storage system, since there is a port used for a connection with a host for each control unit, a human operation is performed for adding an access path between the host and the newly installed control unit (additionally installed control unit).

In such an operation, operations of stopping the operation of the storage system, temporarily logging out (cutting off) existing active paths, and logging in (connecting to) the additionally installed control unit are performed.

However, a storage system that is built using the scale-up technique or the scale-out technique may be used by a plurality of hosts. Thus, the stopping of the operation of the system has a strong influence on the works of the hosts and is not desirable.

In addition, it is necessary to optimize the loads of a plurality of control units including the additionally installed control unit.

[Patent Literature 1] Japanese Laid-open Patent Publication No. 2005-50303
[Patent Literature 2] Japanese Laid-open Patent Publication No. 2008-269338

SUMMARY

An object of an aspect is to provide a control system, a control apparatus, and a storage device capable of autonomously setting access paths in a case where a control unit is additionally installed.

In addition, the object of the present invention is not limited thereto, but another object is to provide advantages that are led by each configuration represented in the embodiment of the present invention to be described later and are not acquired according to a conventional technology.

There is provided a control system including: a superordinate apparatus that includes a multi-path driver controlling an access path; and a second control unit that transmits a control signal used for an instruction for setting an access path to a first control unit that is newly connected to be communicable with the superordinate apparatus to the superordinate apparatus, wherein the multi-path driver sets the access path to the first control unit based on the control signal supplied from the second control unit.

In addition, the control apparatus may further include: a communication unit that communicates with a superordinate apparatus including a multi-path driver that controls an access path; and a transmission unit that transmits a control signal used for an instruction for setting an access path to a first control unit that is newly connected to be communicable with the superordinate apparatus to the superordinate apparatus.

In addition, there is provided a control program causing a computer that is communicable with a superordinate apparatus including a multi-path driver controlling an access path to perform: transmitting a control signal used for an instruction for setting an access path to a first control unit that is newly connected to be communicable with the superordinate apparatus to the superordinate apparatus.

Effect of the Invention

According to the embodiment, access paths can be autonomously set in a case where a control unit is additionally installed.

BRIEF DESCRIPTION OF DRAWINGS

FIG. 1 is a diagram that schematically illustrates the configuration of a storage system as an example of an embodiment;

FIG. 2 is a diagram that illustrates an exemplary hardware configuration of a storage system as an example of the embodiment;

FIG. 3 is a diagram that illustrates an exemplary hardware configuration of a processor unit of a storage system as an example of the embodiment;

FIG. 4 is a diagram that illustrates exemplary load recording information in a storage system as an example of the embodiment;

FIG. 5 is a diagram that illustrates exemplary performance score information in a storage system as an example of the embodiment;

FIG. 6 is a diagram that illustrates exemplary target load information in a storage system as an example of the embodiment;

FIG. 7 is a diagram that illustrates an exemplary in-charge list in a storage system as an example of the embodiment;

FIG. 8 is a flowchart for describing a method of selecting a moving virtual disk in a storage system as an example of the embodiment;

FIG. 9 is a sequence diagram for describing a method of switching an access path to a virtual disk in a storage system as an example of the embodiment;

FIG. 10 is a flowchart for describing the process performed when a processor unit is additionally installed in a storage system as an example of the embodiment;

FIG. 11 is a diagram that illustrates an exemplary state when a new processor unit is additionally installed in a storage system as an example of the embodiment;

FIG. 12 is a diagram that illustrates an exemplary state when a new processor unit is additionally installed in a storage system as an example of the embodiment;

FIG. 13 is a diagram that illustrates exemplary load recording information in a storage system as a modified example of the embodiment;

FIG. 14 is a diagram that illustrates exemplary performance score information in a storage system as a modified example of the embodiment;

FIG. 15 is a diagram that illustrates exemplary target load information in a storage system as a modified example of the embodiment;

FIG. 16 is a diagram that illustrates an exemplary in-charge list in a storage system as a modified example of the embodiment; and

FIG. 17 is a flowchart for describing a method of determining a moving virtual disk in a storage system as a modified example of the embodiment.

DESCRIPTION OF EMBODIMENT(S)

Hereinafter, a control system, a control apparatus, and a control program according to embodiments will be described with reference to the drawings. However, the embodiments described below are merely examples, and there is no intension of excluding the application of various modified examples or technologies not clarified in the embodiment. In other words, the embodiment may be variously changed (a combination between the embodiment and each modified example or the like may be made) within the range not departing from the concept thereof. In addition, each diagram is not intended to include only constituent elements illustrated in the figure but may include other functions or the like.

(A) Embodiment

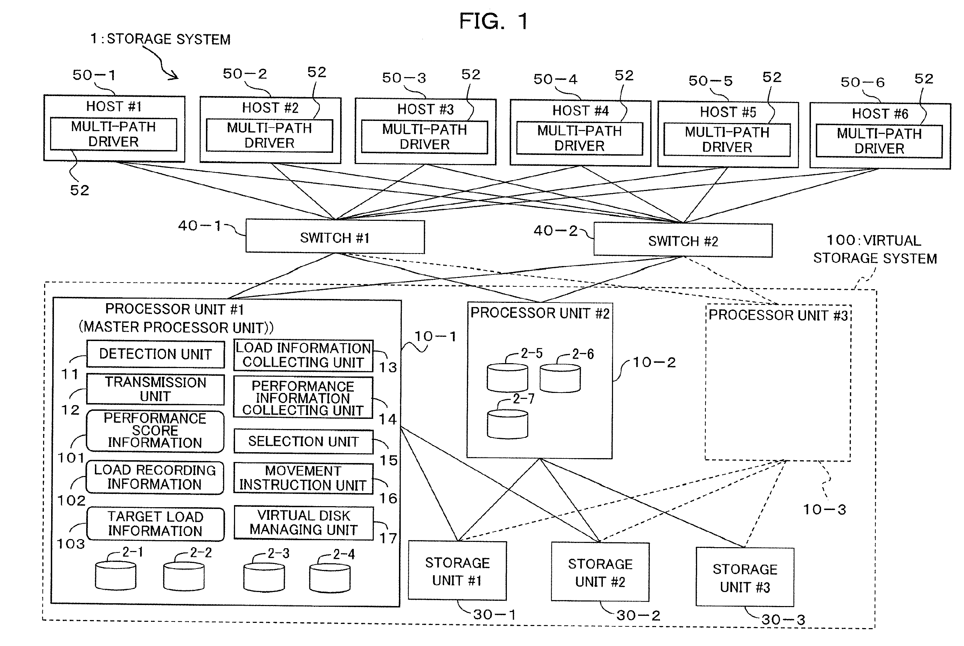

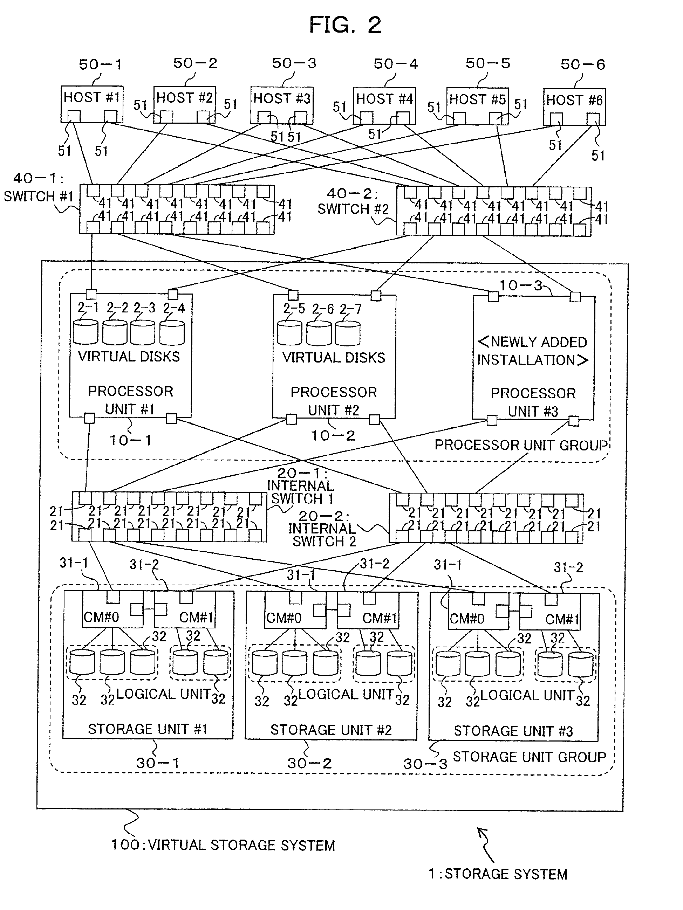

FIG. 1 is a diagram that schematically illustrates the configuration of a storage system as an example of an embodiment, and FIG. 2 is a diagram that illustrates the hardware configuration thereof.

The storage system 1, as illustrated in FIG. 1, is equipped with: one or more (six in the example illustrated in FIG. 1) hosts (superordinate apparatuses) 50-1 to 50-6; a plurality of (two in the example illustrated in FIG. 1) switches 40-1 and 40-2; and a virtual storage system 100.

The storage system 1 is a scale-out type system, and the scale of the system can be extended by arbitrary connecting (additionally installing) a storage unit 30 or the processor unit 10.

In this embodiment, an example will be described in which a new processor unit 10-3 is additionally installed to the virtual storage system 100 that includes two processor units 10-1 and 10-2.

Hereinafter, as a reference numeral that represents a processor unit, when one of a plurality of processor units needs to be specified, one of reference numerals 10-1 to 10-3 will be used, but, when an arbitrary processor unit is represented, reference numeral 10 will be used. In addition, the processor unit 10 will be described later in detail.

The hosts 50-1 to 50-6 are respectively computers each having a server function. Such hosts 50-1 to 50-6 perform data writing or data reading by accessing to a virtual disk (virtual volume) 2 provided by the virtual storage system 100.

The hosts 50-1 to 50-6 have the same configuration. Hereinafter, as a reference numeral that represents a host, when one of a plurality of hosts needs to be specified, reference numerals 50-1 to 50-6 will be respectively used, but, when an arbitrary host is represented, reference numeral 50 will be used. The host 50-1 may be represented as host #1. Similarly, the hosts 50-2 to 50-6 may be represented as hosts #2 to #6.

Each host 50, as illustrated in FIG. 2, is equipped with a plurality of (two in the example illustrated in FIG. 2) host adapters 51, and the host adapters 51 are connected to ports 41 included in the switches 40-1 and 40-2 through communication lines such as LAN cables.

The hosts 50-1 to 50-6 are communicably connected to the processor units 10 of the virtual storage system 100 through the switch 40-1. In addition, the hosts 50-1 to 50-6 are communicably connected to the processor units 10 also through the switch 40-2. Accordingly, the communication path connecting the hosts 50-1 to 50-6 and the processor units 10 is made redundant as a path formed through the switch 40-1 and a path formed through the switch 40-2.

Each one of the hosts 50-1 to 50-6 and each one of the processor units 10, for example, are interconnected through an internet small computer system interface (iSCSI). In other words, the switch 40 is a local area network (LAN) switch.

In addition, in each host 50, a multi-path driver 52 is stored in a storage device such as a memory not illustrated in the figure, and, by executing the multi-path driver 52 using a processor not illustrated in the figure as well, access path switching control to be described later is realized.

The multi-path driver 52 communicates with each processor unit 10 to be described later and is a program that controls an access to each virtual disk (virtual volume) 2 provided by each processor unit 10. The multi-path driver 52 manages an access path (logical path) to each virtual disk 2. Attribute information of either "Active" or "Standby" is set to the access path to the virtual disk 2. Here, in a case where "Standby" is set to an access path, an access to the virtual disk 2 connected through the access path cannot be made. On the other hand, in a case where "Active" is set to an access path, an access to the virtual disk 2 connected through the access path can be made.

The multi-path driver 52 has a function for setting "Active" or "Standby" to each access path to the virtual disk 2.

When an access path generation instruction to be described later is received from the processor unit 10, the multi-path driver 52 sets (allocates) an access path to the virtual disk 2 in accordance with the access path generation instruction and sets the access path that has been set to be in the standby state. In other words, the multi-path driver 52 has a function for adding a new access path as a standby path.

In addition, when an active path change instruction to be described later is received from the processor unit 10, the multi-path driver 52 sets an access path (standby path) that is in the standby state to be in the active state, thereby changing the access path to an active path.

The multi-path driver 52 is provided in the form being recorded in a computer readable recording medium such as a flexible disk, a CD (a CD-ROM, a CD-R, a CD-RW, or the like), a DVD (a DVD-ROM, a DVD-RAM, a DVD-R, a DVD+R, a DVD-RW, a DVD+RW, an HD DVD, or the like), a Blu-ray disc, a magnetic disk, an optical disc, or a magneto-optical disk. The computer reads the program from the recording medium, transmits the program to an internal storage device or an external storage device so as to be stored therein, and uses the stored program. In addition, the program may be configured to be recorded in a storage device (recording medium) such as a magnetic disk, an optical disk, or a magneto-optical disk and be provided for a computer from the storage device through a communication path.

In order to realize the function by executing the multi-path driver 52, a program stored in the internal storage device (in this embodiment, a memory not illustrated in the figure), is executed by a microprocessor (not illustrated in the figure) of a computer. At this time, a program recorded on a recording medium may be configured to be read by a computer.

In this embodiment, the computer has a concept that includes hardware and an operating system and represents the hardware operating under the control of the operating system. In a case where the operating system is not necessary, and the hardware is operated by an application program only, the hardware in itself corresponds to the computer. The hardware is equipped at least with a microprocessor such as a CPU and a unit used for reading a computer program recorded on a recording medium, and the host 50 has the function as a computer.

The switches 40-1 and 40-2 are communication devices (relay devices) that switch transmission destinations of data in the computer network.

Such switches 40-1 and 40-2 have the same configuration. Hereinafter, as a reference numeral that represents a switch, when one of a plurality of switches needs to be specified, reference numeral 40-1 or 40-2 will be used, but, when an arbitrary switch is represented, reference numeral 40 will be used. In addition, the switch 40-1 may be represented as switch #1, and the switch 40-2 may be represented as switch #2.

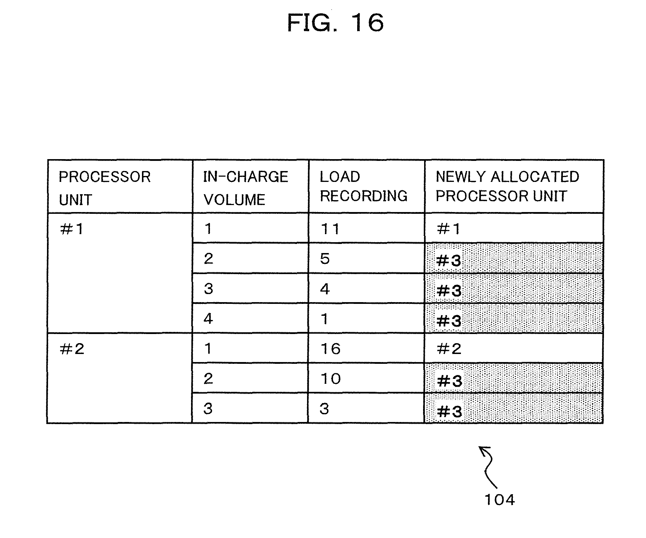

Each switch 40, as illustrated in FIG. 2, is equipped with a plurality of ports 41. Such a port 41 is connected to a host adapter 51 included in the host 50 and a host interface (I/F) 110 of the processor unit 10 through communication lines. In the example illustrated in FIG. 2, 16-port switches 40-1 and 40-2 each being equipped with 16 ports 41 are provided. In addition, each switch 40 is equipped with a processor not illustrated in the figure that is used for controlling data transmission and the like.

The virtual storage system 100 virtualizes the storage areas of storage devices 32 (actual disks) of the storage units 30-1 to 30-3 and provides users with virtual disks 2-1 to 2-7 that are not dependent on the types, the arranged locations, and the like of the storage devices 32 for the hosts 50 and the like.

The virtual storage system 100, as illustrated in FIG. 2, is equipped with: one or more (two in the example illustrated in FIG. 2) processor units 10-1 and 10-2; one or more (two in the example illustrated in FIG. 2) internal switches 20-1 and 20-2; and one or more (three in the example illustrated in FIG. 2) storage units 30-1 to 30-3.

In FIG. 1, for the convenience of description, parts of the virtual storage system 100 such as the internal switches 20-1 to 20-2 are not illustrated.

In this storage system 1, the configuration is changeable in units of processor units, and a processor unit 10 can be arbitrary added or omitted.

Each one of the storage units 30-1 to 30-3, as illustrated in FIG. 2, is equipped with one or more storage devices 32 and a plurality of (two in the example illustrated in FIG. 2) controller modules (CM) 31-1 and 31-2 and stores data.

The storage units 30-1 to 30-3 have the same configuration. Hereinafter, as a reference numeral that represents a storage unit, when one of a plurality of storage units needs to be specified, one of reference numerals 30-1 to 30-3 will be used, but, when an arbitrary storage unit is represented, reference numeral 30 will be used.

In this storage system 1, the configuration is changeable in units of storage units 30, and a storage unit 30 can be arbitrary added or omitted.

The storage device 32 is a storage device such as a hard disk drive (HDD) or a solid state drive (SSD) and stores various kinds of data. In the example illustrated in FIG. 2, although five storage devices 32 are provided in each storage unit 30, the number of storage devices is not limited thereto. Thus, in each storage unit 30, four or less storage devices 32 or six or more storage devices 32 may be provided.

In each storage unit 30, a logical unit is configured by one or a plurality of the storage devices 32. In each storage unit 30, redundant arrays of inexpensive disks (RAID) may be configured by a plurality of the storage devices 32.

In addition, in this storage system 1, the configuration of the storage unit 30 is changeable in units of storage devices 32, and a storage device 32 can be arbitrarily added or omitted.

The CMs 31-1 and 31-2 perform various control operations such as controlling an access to data stored inside the storage unit 30 and controls an access to the storage device 32 in accordance with a storage access request (access control signal) supplied from the processor unit 10. The CMs 31-1 and 31-2 have the same functional configuration.

The CMs 31-1 and 31-2 are connected to the processor units 10-1 and 10-2 through the internal switches 20-1 and 20-2 and control the storage device 32 in accordance with a command such as "read" or "write" supplied from the host 50.

The internal switches 20-1 and 20-2 switch the transmission destinations of data inside the virtual storage system 100. Such internal switches 20-1 and 20-2 have the same configuration. Hereinafter, as a reference numeral that represents an internal switch, when one of a plurality of internal switches needs to be specified, one of reference numerals 20-1 and 20-2 will be used, but, when an arbitrary internal switch is represented, reference numeral 20 will be used.

The internal switch 20 is equipped with a plurality of (16 in the example illustrated in FIG. 2) ports 21. Such a port 21 is connected to a storage I/F 111 of the processor unit 10 and the interface of the storage unit 30 through communication lines.

Inside the virtual storage system 100, the processor units 10 and the storage units 30-1 to 30-3 are connected together, for example, through iSCSIs. In other words, the internal switch 20 is a LAN switch.

The processor unit (control unit) 10 controls for providing the hosts 50 with virtual disks that are virtual logical storage areas.

Each processor unit 10 is connected to be communicable with the storage units 30-1 to 30-3 through the internal switch 20-1. In addition, each processor unit 10 is connected to be communicable with the storage units 30-1 to 30-3 also through the internal switch 20-2. Accordingly, the communication path connecting the processor units 10 and the storage units 30-1 to 30-3 is made redundant as a path formed through the internal switch 20-1 and a path formed through the internal switch 20-2.

Hereinafter, the processor unit 10-1 may be referred to as processor unit #1. Similarly, the processor unit 10-2 may be referred to as processor unit #2, and the processor unit 10-3 may be referred to as processor unit #3. In addition, particularly, a processor unit 10-3 that is newly added to this storage system 1 will be referred to as new processor unit or an additionally installed processor unit and may be represented by reference numeral 10-3 or #3.

In this storage system 1, one of the plurality of processor units 10 serves as a master processor (second control unit), and this master processor unit 10 manages the other slave processor units (third control units) 10. In this embodiment, the processor unit 10-1 is the master processor unit, and the other processor units 10-2 and 10-3 are the slave processor units.

In a case where any abnormality is detected in the master processor unit 10-1 during the operation of the storage system 1 equipped with the plurality of processor units 10-1 to 10-3, instead of the processor unit 10-1, one of the processor units 10-2 and 10-3 serves as the master processor unit. In other words, each processor unit 10 is configured to be able to realize the function as the master processor unit.

In addition, various changes may be made, for example, such that a processor unit 10 to serve as the next master processor unit out of a plurality of slave processor units 10, for example, is determined according to priority levels set in advance or the like in a case where any abnormality is detected in the master processor unit 10-1.

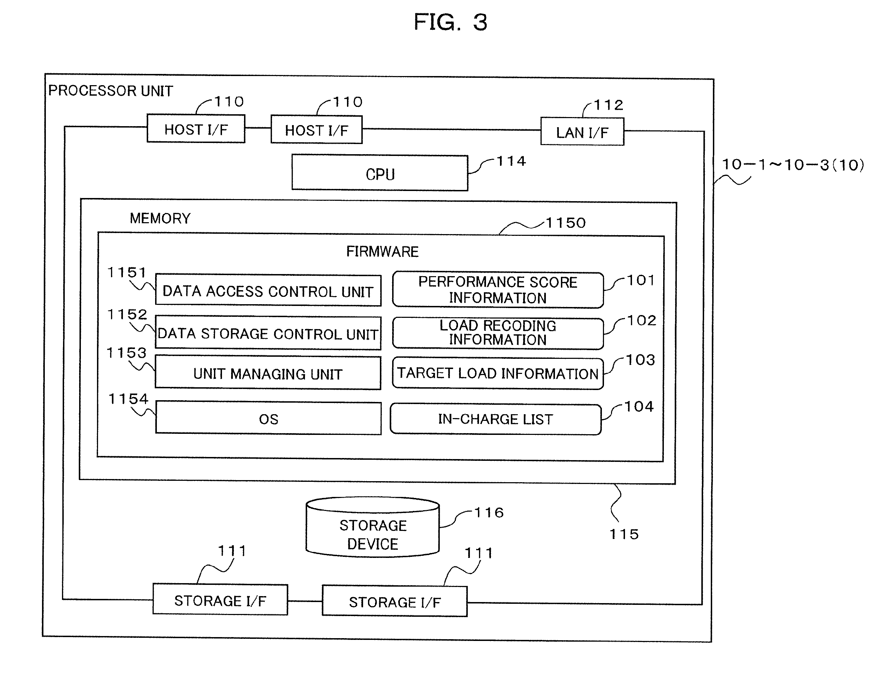

FIG. 3 is a diagram that illustrates an exemplary hardware configuration of the processor unit 10 of the storage system 1 as an example of the embodiment.

The processor unit 10, as illustrated in FIG. 3, is equipped with: a CPU 114; a memory 115; a storage device 116; a LAN I/F 112; one or more (two in the example illustrated in FIG. 3) host I/F 110; and one or more (two in the example illustrated in FIG. 3) storage I/F 111.

The host I/F (communication unit) 110 is a communication control device used for performing data communication with the above-described host 50, and the storage I/F 111 is a communication control device used for performing data communication with the storage unit 30. The LAN I/F 112 is a communication device used for performing data communication with the other processor units 10. As the LAN I/F 112, the host I/F 110, and the storage I/F 111, various interface devices that are well known may be used.

The memory 115 is a storage device that includes a ROM and a RAM. In the ROM of the memory 115, an operating system (OS) 1154, a software program (firmware: control program) relating to virtual disk control, and data used for this program are written. The OS 1154 on the memory 115 and various software programs are appropriately read and executed by the CPU 114.

In the example illustrated in FIG. 3, a firmware 1150 stored in the memory 115 has modules that realize the functions as a data access control unit 1151, a data storage control unit 1152, and a unit managing unit 1153.

Here, the data access control unit 1151 controls an access from the host 50 and, for example, controls a data access from the host 50 to the virtual disk 2. The data storage control unit 1152 controls an access to each storage unit 30. The unit managing unit 1153 performs various control operations used for building the virtual disk system. For example, the unit managing unit 1153 sets the virtual disks 2 and performs mapping between the virtual disks 2 and the storage devices 32 included in the storage unit 30 and the like.

In addition, the data access control unit 1151, the data storage control unit 1152, and the unit managing unit 1153 realize the functions as a detection unit 11, a transmission unit 12, a load information collecting unit 13, a performance information collecting unit 14, a selection unit 15, a movement instruction unit 16, and a virtual disk managing unit 17, which will be described later, in cooperation with one another.

The RAM of the memory 115 is used as a primary storage memory or a working memory.

In the memory 115 of the master processor unit 10-1, performance score information 101, load recording information 102, target load information 103, and an in-charge list 104, which will be described later, are stored.

The CPU 114, which is a processor not illustrated in the figure, is a processing unit that performs various control operations and calculation operations and executes the OS 1154 or the program (firmware 1150: control program) stored in the memory 115, thereby realizing various functions.

In other words, in the master processor unit 10-1, the CPU 114, as illustrated in FIG. 1, serves as the virtual disk managing unit 17, the detection unit 11, the transmission unit 12, the load information collecting unit 13, the performance information collecting unit 14, the selection unit 15, and the movement instruction unit 16.

The program (firmware 1150) used for realizing the functions as the virtual disk managing unit 17, the detection unit 11, the transmission unit 12, the load information collecting unit 13, the performance information collecting unit 14, the selection unit 15, and the movement instruction unit 16, for example, is provided in the form being recorded in a computer readable recording medium such as a flexible disk, a CD (a CD-ROM, a CD-R, a CD-RW, or the like), a DVD (a DVD-ROM, a DVD-RAM, a DVD-R, a DVD+R, a DVD-RW, a DVD+RW, an HD DVD, or the like), a Blu-ray disc, a magnetic disk, an optical disc, or a magneto-optical disk. The computer reads the program from the recording medium, transmits the program to an internal storage device or an external storage device so as to be stored therein, and uses the stored program. In addition, the program may be configured to be recorded in a storage device (recording medium) such as a magnetic disk, an optical disk, or a magneto-optical disk and be provided for a computer from the storage device through a communication path.

In order to realize the functions as the virtual disk managing unit 17, the detection unit 11, the transmission unit 12, the load information collecting unit 13, the performance information collecting unit 14, the selection unit 15, and the movement instruction unit 16, the program stored in the internal storage device (the memory 115 in this embodiment) is executed by the microprocessor (the CPU 114 in this embodiment) of the computer. At this time, the program recorded on a recording medium may configured to be read through a reading device not illustrated in the figure and be executed by the computer. In this embodiment, the processor unit 10 has a function as the computer.

The virtual disk managing unit 17 forms the storage devices 32 mounted in the storage units 30 as a pool and performs clustering of the processor units 10, thereby realizing a virtual disk 2. The setting of the virtual disk 2 in the processor unit 10 may be realized by using a known technique, and thus, the description thereof will not be presented.

In the example illustrated in FIG. 1, virtual disks 2-1 to 2-4 are included in the processor unit 10-1. Similarly, virtual disks 2-5 to 2-7 are included in the processor unit 10-2.

In other words, in the state illustrated in FIG. 1, the processor unit 10-1 manages the virtual disks 2-1 to 2-4, and the processor unit 10-2 manages the virtual disks 2-5 to 2-7. Hereinafter, the managing of the virtual disk 2 using the processor unit 10 may be represented as the processor unit 10 being in charge of the virtual disk 2.

In this storage system 1, each one of the processor units 10-1 and 10-2 corresponds to third control unit that manages the plurality of virtual volumes 2.

Then, when a processor unit 10-3 is newly added, at least some of the virtual disk array devices 2-1 to 2-7 are moved to the processor unit 10-3.

The detection unit 11 detects (recognizes) that the new processor unit 10 has been additionally installed (connected) to this storage system 1.

In the virtual storage system 100, in a case where a new processor unit 10-3 is additionally installed, the added processor unit 10-3 is connected to the existing processor units 10-1 and 10-2 through the LAN I/F 112. In addition, this added processor unit 10-3 is connected to the hosts 50-1 to 50-6 through the switches 40-1 and 40-2 and is connected to the storage units 30-1 to 30-3 through the internal switches 20-1 and 20-2.

The detection unit 11 may detect the new processor unit 10-3 through the LAN I/F 112, the host 50, or the like.

In addition, the detection unit 11 acquires information of a target ID of the iSCSI or the like from the new processor unit 10-3 and stores the acquired information in management information not illustrated in the figure, thereby recognizing the presence of the new processor unit 10-3.

The load information collecting unit 13 collects load information for each access path from each host 50 to each virtual volume 2 of each processor unit 10. More specifically, the load information collecting unit 13, for each access path to the virtual disk 2, measures "input/output per second (iops)/ data transmission amount" as load information for each access path. The iops is one of the performance indexes of a storage device, and "iops/data transmission amount" represents the iops at a predetermined data transmission amount.

In other words, the load information collecting unit 13 causes each one of the processor units 10-1 and 10-2 including the virtual disk 2 to measure the iops/data transmission amount for each access path to the virtual disk 2 managed (taken charge) thereby.

When an instruction for measuring the iops/data transmission amount is received from the load information collecting unit 13 of the master processor unit 10-1, each processor unit 10 measures (acquires) the iops/data transmission amount for each path to the virtual disk 2 managed thereby and transmits a result of the measurement to the master processor unit 10-1. In addition, the measurement of the iops/data transmission amount for each processor unit 10 may be realized by using a known technique, and thus, the description thereof will not be presented.

The load information collecting unit 13 registers the iops/data transmission amount transmitted from each processor unit 10 in the load recording information 102. The load recording information 102 is configured by mapping the iops/ data transmission amount on information that specifies the virtual disk 2.

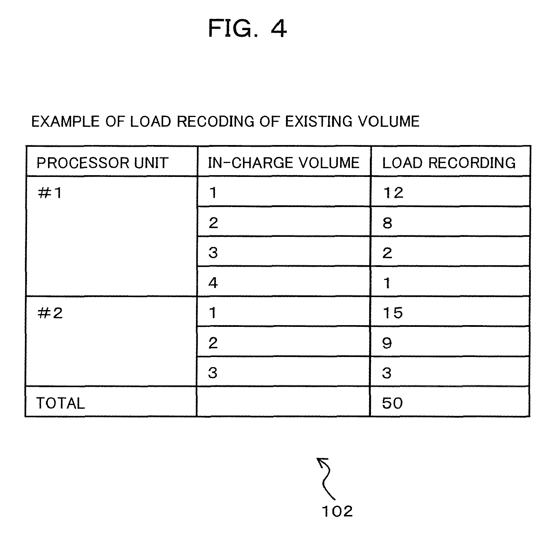

FIG. 4 is a diagram that illustrates exemplary load recording information 102 in the storage system 1 as an example of the embodiment.

The load recording information 102 illustrated in FIG. 4 represents each iops/data transmission amount for existing two processor units #1 and #2 as load recordings in the storage system 1 illustrated in FIG. 1.

The storage system 1 illustrated in FIG. 1 is equipped with four virtual disks 2-1 to 2-4 denoted by ID1 to ID4 in the processor unit #1 and is equipped with three virtual disks 2-5 to 2-7 specified by the ID1 to ID3 in the existing processor unit #2.

In the load recording information 102 illustrated in FIG. 4, the iops/data transmission amount is stored as a load recording for each one of the existing virtual disks 2 (in-charge volume) of the storage system 1. In the example illustrated in FIG. 4, a sum of the iops/data transmission amount of the virtual disks 2 is 50.

This load recording information 102, for example, is stored in the memory 115 or the storage device 116 of the master processor unit 10-1.

The performance information collecting unit 14 collects the performance information of each processor unit 10 arranged inside the storage system 1. More specifically, the performance information collecting unit 14 causes all the processor units 10 including the new processor unit 10-3 to execute a performance checking program stored in advance in the storage device 116 or the like of each processor unit 10.

The performance checking program measures the processing performance of the processor unit 10 in which the program is executed and outputs a result of the measurement as a score (performance score: performance information). As this performance checking program, for example, existing various programs that are bench marking programs measuring the calculation performance of the CPU 114 and the like may be used.

Each processor unit 10 that has executed the performance checking program transmits the performance score output as a result of the measurement to the performance information collecting unit 14 of the master processor unit 10-1.

The performance information collecting unit 14 manages the performance score transmitted from each processor unit 10 as the performance score information 101.

The performance score information 101 is configured by associating a performance score with identification information that specifies the processor unit 10 that is the transmission source of the performance score.

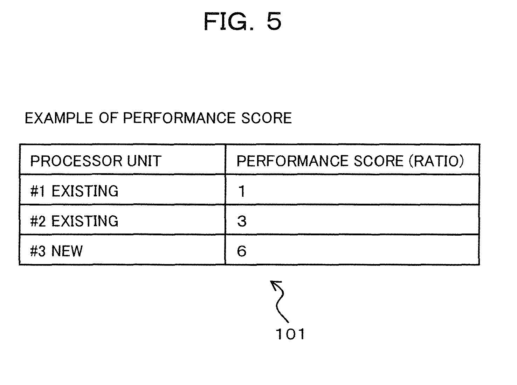

FIG. 5 is a diagram that illustrates exemplary performance score information 101 in the storage system 1 as an example of the embodiment.

In the performance score information 101 illustrated in FIG. 5, the values of the performance scores of all the processor units #1 to #3 arranged inside the storage system 1 including the new processor unit #3 are represented as ratios with respect to the performance score of the processor unit #1 as a reference.

In other words, in a case where the processing performance of the processor unit #1 is "1", the processing performances of the processor units #2 and #3 are represented as "3" and "6".

This performance score information 101, for example, is stored in the memory 115 or the storage device 116 of the master processor unit 10-1.

The performance information collecting unit 14 acquires the performance information of each processor unit 10 included in the storage system 1, for example, when this storage system 1 is built. In addition, when the additional installation of a new processor unit 10 to this storage system 1 is recognized by the detection unit 11, the performance information collecting unit 14 acquires the performance information also from the newly connected processor unit 10.

The performance information collecting unit 14 does not need to collect the performance information again from the processor unit 10 of which the performance score has been acquired once. Alternatively, when the performance information is acquired from the newly connected processor unit 10, the performance information may be collected again by transmitting an instruction for executing the performance checking program also to the existing processor units 10.

Here, the method of acquiring the performance information using the performance information collecting unit 14 is not limited to the method in which a performance score is acquired by causing each processor unit 10 to execute the performance checking program, but may be variously changed. For example, the performance information may be acquired by reading information (for example, a performance value or a bench mark result of the mounted CPU 114 or the like) representing the processing performance of each processor unit 10 presented by the manufacturer thereof or the like through a network or a recording medium.

The selection unit 15 selects a virtual volume (moving virtual volume) 2 to be moved to the newly added processor unit 10 from among the virtual volumes managed by each processor unit 10 based on the performance scores (performance information) collected by the performance information collecting unit 14.

The selection unit (target load setting unit) 15 determines a target load of each processor unit 10 in accordance with the performance information of each processor unit 10 including the new processor unit 10.

More specifically, the selection unit 15, for example, determines the target load of each processor unit 10 by distributing a sum value (50 in the example illustrated in FIG. 4) of the load recordings of the existing virtual volume 2 that is included in the load recording information 102 in accordance with the performance information of all the processor units 10 including the new processor unit #3. In other words, for each processor unit 10, a load (in-charge load) corresponding to the processing performance thereof is determined.

The selection unit 15 registers the determined target load of each processor unit 10 in the target load information 103.

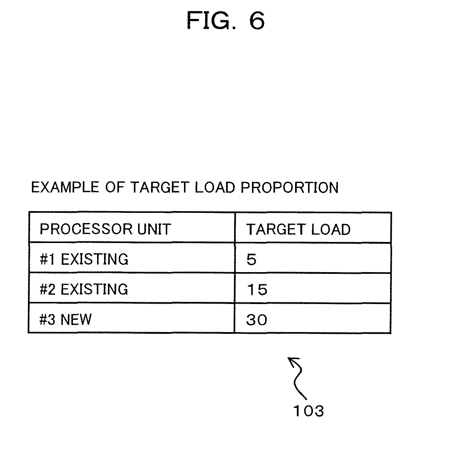

FIG. 6 is a diagram that illustrates exemplary target load information 103 in the storage system 1 as an example of the embodiment.

The target load information 103 illustrated in FIG. 6 is configured by associating a target load set by the selection unit 15 with each processor unit 10.

In the load recording information 102 illustrated in FIG. 4, a sum value of the load recordings (iops/data transmission amount) of the processor units #1 and #2 is 50. In addition, in the performance score information 101 that is illustrated in FIG. 5, the performance score ratio of the processor units #1, #2, and #3 is 1 : 3 : 6.

Based on such information, the values of the target loads of the processor units #1, #2, and #3 are acquired by using the following equation.

$$\text{Target Load of Processor Unit \#1} = 50 \times 1/(1 + 3 + 6) = 5$$

$$\text{Target Load of Processor Unit \#2} = 50 \times 3/(1 + 3 + 6) = 15$$

```
Target Load of Processor Unit #3 = 50 × 6/(1 + 3 + 6) = 30
```

In the target load information 103, the values of the target loads acquired as described above are respectively registered.

The selection unit 15 selects the virtual disk 2 to be moved to the new processor unit #3 by referring to the load recording information 102 and the target load information 103 described above.

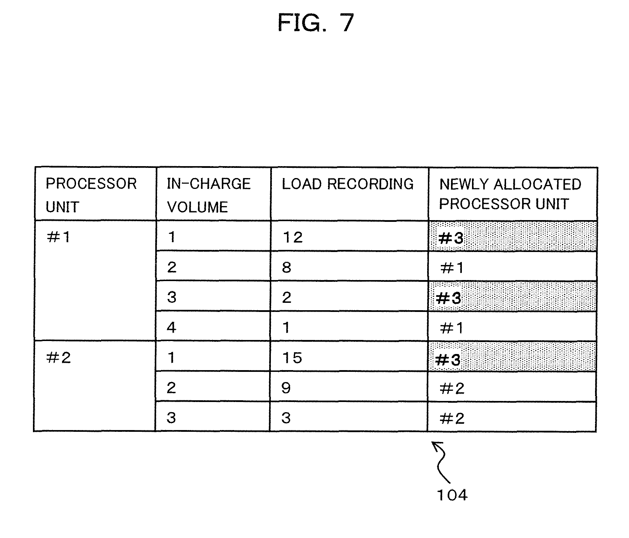

More specifically, for example, the selection unit 15 allocates the virtual disks 2 by using the in-charge list 104 as illustrated in FIG. 7. The in-charge list 104 represents that which one of the plurality of processor units 10 including the new processor unit 10 is in charge of each virtual disk 2 included in this storage system 1.

FIG. 7 is a diagram that illustrates an exemplary in-charge list 104 in the storage system 1 as an example of the embodiment.

In the example illustrated in FIG. 7, the in-charge list 104 is configured by further associating a newly allocated processor unit as an item with the load recording information 102 illustrated in FIG. 4. In other words, each virtual disk 2 is configured to be associated with the load recording (iops/ data transmission amount) and the newly allocated processor unit.

The newly allocated processor unit represents a processor unit 10 that is in charge of each virtual disk 2 (in-charge volume) in the storage system 1 of which the configuration has been changed by additionally installing the new processor unit #3.

In other words, in the example illustrated in FIG. 7, the new processor unit #3 is represented to be in charge of the virtual disks 2 of the in-charge volumes 1 and 3 of the processor unit #1 and the in-charge volume 1 of the processor unit #2 out of the plurality of virtual disks 2 illustrated in FIG. 4. In other words, the virtual disks 2 of the in-charge volumes 1 and 3 of the processor unit #1 and the virtual disks 2 of the in-charge volume 1 of the processor unit #2 are represented to be selected as the moving virtual disk 2 to be moved to the processor unit #3.

In the initial state of this in-charge list 104, to each virtual disk 2, information (a flag or the like) indicating that a processor unit (in-charge processor unit) 10 that is in charge of the virtual disk 2 has not been determined is set (not illustrated in the figure). In addition, in the in-charge list 104 that is in the initial state, as a newly allocated processor unit corresponding to each virtual disk, the original processor unit 10 that manages the virtual disk 2 is registered.

The selection unit 15 selects one having a largest value of the load recoding out of virtual disks 2 for which an in-charge processor unit 10 has not been determined in the in-charge list 104 and determines whether or not the selected virtual disk 2 is allocatable to the new processor unit 10.

More specifically, in a case where a sum of the load recordings of the selected virtual disk 2 and the virtual disk 2 selected in advance does not exceed the target load of the new processor unit #3, the selection unit 15 determines that the selected virtual disk 2 is allocatable. On the other hand, in a case where a sum of the load recordings of the selected virtual disk 2 and the virtual disk 2 selected in advance is the target load of the new processor unit 10 or more, the selection unit 15 determines that the selected virtual disk 2 is not allocatable.

In this way, the selection unit 15 selects the virtual disk 2 in a range in which a sum of the load recordings does not exceed the target load of the new processor unit 10 and determines the selected virtual disk 2 as the moving virtual disk 2. In addition, at this time, the selection unit 15 sequentially selects virtual disks 2 starting from a virtual disk 2 having a largest value of the load recording by referring to the load recording information 102 and determines whether or not a sum value of the load recordings of the selected virtual disks 2 is less than the target load of the new processor unit 10.

By sequentially selecting virtual disks 2 starting from a virtual disk 2 having a largest value of the load recording, the number of virtual disks 2 to be moved to the new processor unit 10 can be decreased, and a time or a load required for the process performed by the movement instruction unit 16 to be described later can be reduced.

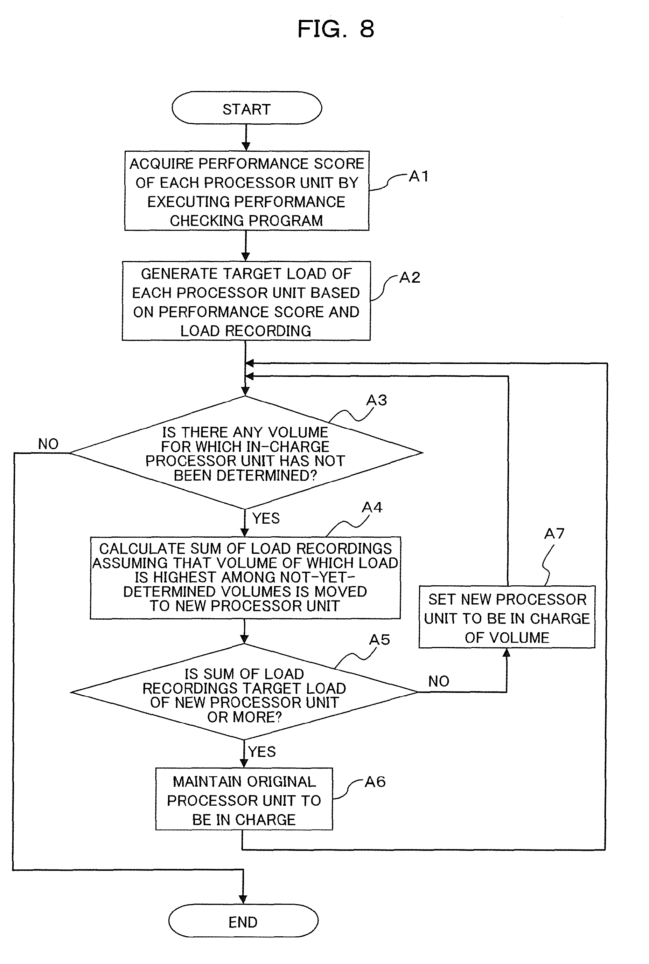

Here, the method of determining the moving virtual disks 2 in the storage system 1 as an example of the embodiment will be described with reference to FIG. 8. Here, as illustrated in FIG. 1, an example will be described in which a new processor unit #3 is additionally installed to the storage system 1 including processor units #1 and #2.

In Step A1, the performance information collecting unit 14 causes each processor unit 10 to execute the performance checking program, thereby acquiring the performance score of each processor unit 10. The performance information collecting unit 14 generates performance score information 101 based on the collected performance scores.

Subsequently, in Step A2, the performance information collecting unit 14 generates target load information 103 based on the generated performance score information 101 and the load recording information 102 generated by the load information collecting unit 13.

Subsequently, in Step A3, the selection unit 15 checks whether or not there is a virtual disk (volume) 2 of which the in-charge processor unit 10 has not been determined by referring to the in-charge list 104.

In a case where there is a virtual disk 2 of which the in-charge processor unit 10 has not been determined (see the route of YES in Step A3), in Step A4, a virtual disk 2 having a largest load recording out of the virtual disks 2 of which the in-charge processor unit 10 has not been determined is selected as a moving candidate. Then, the selection unit 15 calculates a sum of the load recordings of the new processor unit 10 in a case where the virtual disk 2 selected as the moving candidate is moved to the new processor unit 10.

Then, in Step A5, the sum of the load recordings of the new processor unit 10 and the target load of the new processor unit 10 are compared with each other. In a case where the sum of the load recordings of the new processor unit 10 does not exceed the target load of the new processor unit 10 (see the route of NO in Step A5), in Step A7, the new processor unit 10 is determined to be in charge of the virtual disk 2 that is the moving candidate. Thereafter, the process is returned to Step A3.

On the other hand, in a case where the sum of the load recordings of the new processor unit 10 is the target load of the new processor unit 10 or more (see the route of YES in Step A5), in Step A6, the processor unit 10 that is in charge of the virtual disk 2 that is the moving candidate is not changed. In other words, the original processor unit 10 is maintained to be in charge of the virtual disk 2 that is the moving candidate. Thereafter, the process is returned to Step A3.

Then, when there is no virtual disk 2 of which the in-charge processor unit 10 has not been determined (see the route of NO in Step A3), the process ends.

For example, in the example illustrated in FIGS. 4 and 7, when the virtual disks 2 are sequentially aligned in the descending order of the load recording, the following arrangement is formed. In-charge volume 1 (load recording of 15) of the processor unit #2, in-charge volume 1 (load recording of 12) of the processor unit #1, in-charge volume 2 (load recording of 9) of the processor unit #2, in-charge volume 2 (load recording of 8) of the processor unit #1, in-charge volume 3 (load recording of 3) of the processor unit #2, in-charge volume 3 (load recording of 2) of the processor unit #1, and in-charge volume 4 (load recording of 1) of the processor unit #1.

In addition, in the example illustrated in FIG. 6, the target load of the new processor unit #3 is 30.

According to the flowchart illustrated in FIG. 8, first, the new processor unit 10 is determined to be in charge of the in-charge volume 1 (load recording of 15) of the processor unit #2. Subsequently, the new processor unit 10 is determined to be in charge of the in-charge volume 1 (load recording of 12) of the processor unit #1.

At this time point, a sum value of the load recordings of the two in-charge volumes (virtual disks 2) is 27.

Here, also in a case where any one of the in-charge volume 2 (load recording of 9) of the processor unit #2, the in-charge volume 2 (load recording of 8) of the processor unit #1, and the in-charge volume 3 (load recording of 3) of the processor unit #2 is set as the moving candidate, a sum of the load recordings of the new processor unit 10 is the target load or more. Accordingly, such virtual disks 2 are not moved to the new processor unit 10.

In this way, the new processor unit 10 is determined to be in charge of the in-charge volume 3 (load recording of 2) of the processor unit #1 selected as the moving candidate next. In other words, as illustrated in FIG. 7, as the in-charge volumes of the new processor unit #3, the in-charge volume 1 (load recording of 15) of the processor unit #2, the in-charge volume 1 (load recording of 12) of the processor unit #1, and the in-charge volume 3 (the load recording of 2) of the processor unit #1 are determined.

The movement instruction unit 16 notifies the new processor unit 10, which is a movement destination, of the moving virtual disk 2 selected by the selection unit 15 so as to cause the new processor unit 10 to move the virtual disk 2.

The new processor unit 10, for example, acquires information relating to a virtual disk 2 to be moved based on shared information (not illustrated in the figure) stored in the storage unit 30 and sets the virtual disk 2 by using the acquired information. In addition, the method of moving the virtual disk 2 between the processor units 10 in the storage system 1 may be realized using various techniques that are well known, and the detailed description thereof will not be presented.

When the moving of the virtual disk 2 is completed, the new processor unit 10 notifies the master processor unit 10-1 (transmission unit 12) thereof. In this notification, information (virtual disk ID) used for identifying the virtual disk 2 is included.

The transmission unit 12 transmits a control signal used for an instruction for setting an access path to the new processor unit 10 to each host 50.

When the connection of the new processor unit 10-4 to this storage system 1 is detected, and the virtual disk 2 selected by the selection unit 15 is moved to the new processor unit 10, the transmission unit 12 transmits a control signal for an instruction for setting an access path to the new processor unit 10 to each host 50.

More specifically, the transmission unit 12 transmits a path switching instruction as a control signal for an instruction for setting an access path to the host 50. In this path switching instruction, for example, a specific command representing the path switching instruction, information (for example, the target ID of the iSCSI) used for accessing the new processor unit 10, and information (virtual disk ID) used for identifying the virtual disk 2 of the new processor unit 10 are included.

In addition, in the path switching instruction, an instruction (access path generating instruction) for adding an access path to the virtual disk 2 moved to the new processor unit 10 as a standby path is included.

In addition, the transmission unit 12 sets the access path to the virtual disk 2 in the processor unit 10, which is the movement source, as a standby path for the host 50. Thereafter, the transmission unit 12 sets the access path to the virtual disk 2 moved to the new processor unit 10 as an active path for the host 50. According to such a process, the switching of the access path from the host 50 to the virtual disk 2 is performed.

The multi-path driver 52 of the host 50 that has received the path switching instruction performs a path search for the new processor unit 10 based on the information included in the path switching instruction and allocates the access path acquired as a result of the path search to the processor unit 10. In addition, at this time, the multi-path driver 52 generates the access path as a standby path.

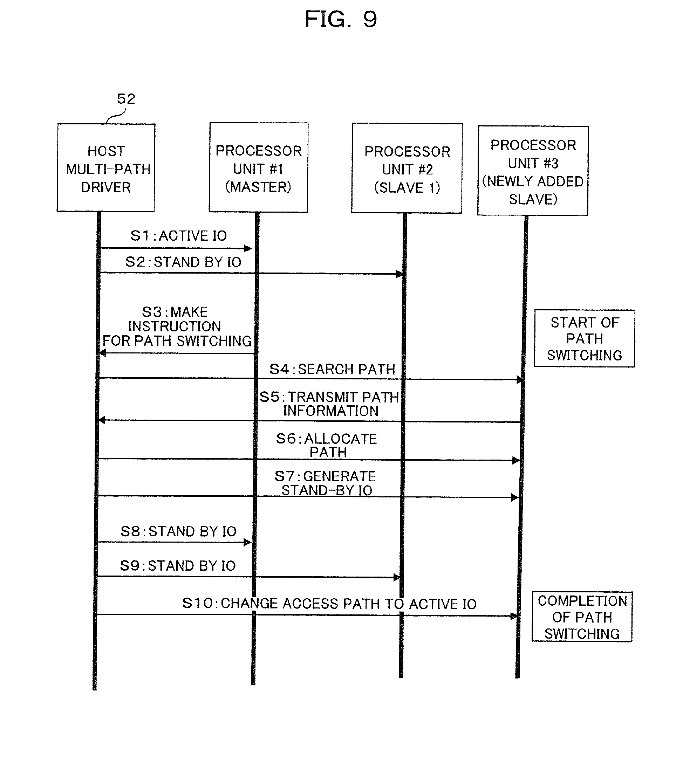

FIG. 9 is a sequence diagram that illustrates a method of switching an access path to a virtual disk 2 in the storage system 1 as an example of the embodiment.

FIG. 9 illustrates an example in which the virtual disks 2 of the processor units #1 and #2 are moved to the new processor unit #3.

Before the switching of the virtual disks 2, an active input/output (I/O) signal representing that the active I/O is set up is transmitted from the multi-path driver 52 of the host 50 to the master processor unit #1 (see arrow S1). In addition, a standby I/O signal representing that the standby I/O is set up is transmitted from the multi-path driver 52 of the host 50 to the processor unit #2 (see arrow S2).

When the moving of the virtual disk 2 from the processor unit #1 to the new processor unit #3 is completed, the switching of the access path from the host 50 to the virtual disk 2 is started. In addition, while the switching of the access path from the host 50 to the virtual disk 2 is performed in each host 50, in the example illustrated in FIG. 9, for the convenience of the description, only the process relating to one host 50 is illustrated.

A path switching instruction is transmitted from the master processor unit #1 to the host 50 (see arrow S3). In this path switching instruction, as described above, the information for accessing the new processor unit #3, information for identifying each virtual disk 2 to be moved to the new processor unit #3, and the access path generating instruction for the virtual disk 2 are included.

The multi-path driver 52 of the host 50 performs a path search for the new processor unit #3 (see arrow S4), and the new processor unit #3 replies to the host 50 with information (path information) of the access path used for accessing each virtual disk 2 (See arrow S5).

The multi-path driver 52 of the host 50 that has received the path information allocates a path to the new processor unit #3 for each virtual disk 2 moved to the new processor unit #3 (see arrow S6) and generates (adds) a new access path as a standby path (see arrow S7).

Thereafter, the multi-path driver 52 of the host 50 transmits an instruction for setting the access paths to the virtual disks 2 to be moved to be in the standby state to the processor units #1 and #2 (see arrows S8 and S9). In addition, the multi-path driver 52 transmits an instruction (active path changing instruction) for setting the active paths to the virtual disks 2 to be moved to be active to the new processor unit #3 (see arrow S10). Accordingly, the switching of the access paths to the virtual disks 2 is completed.

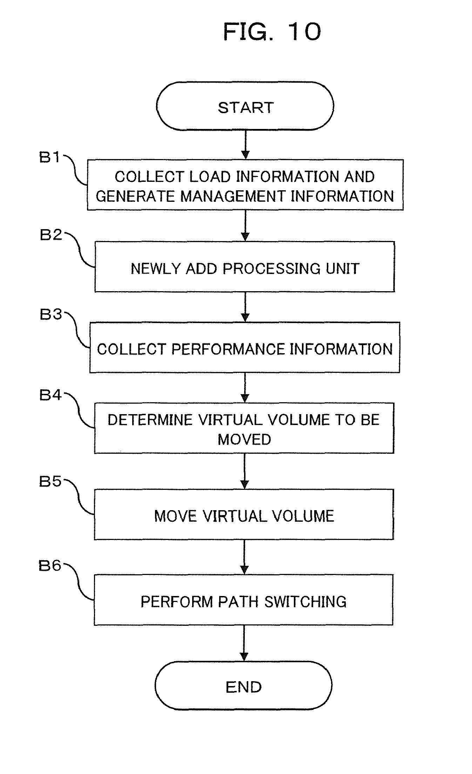

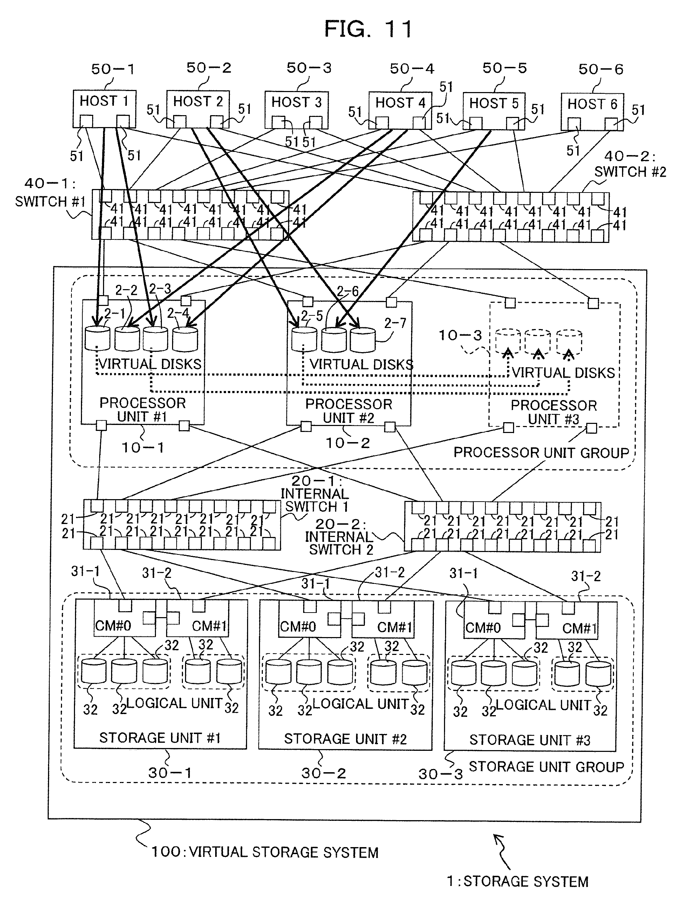

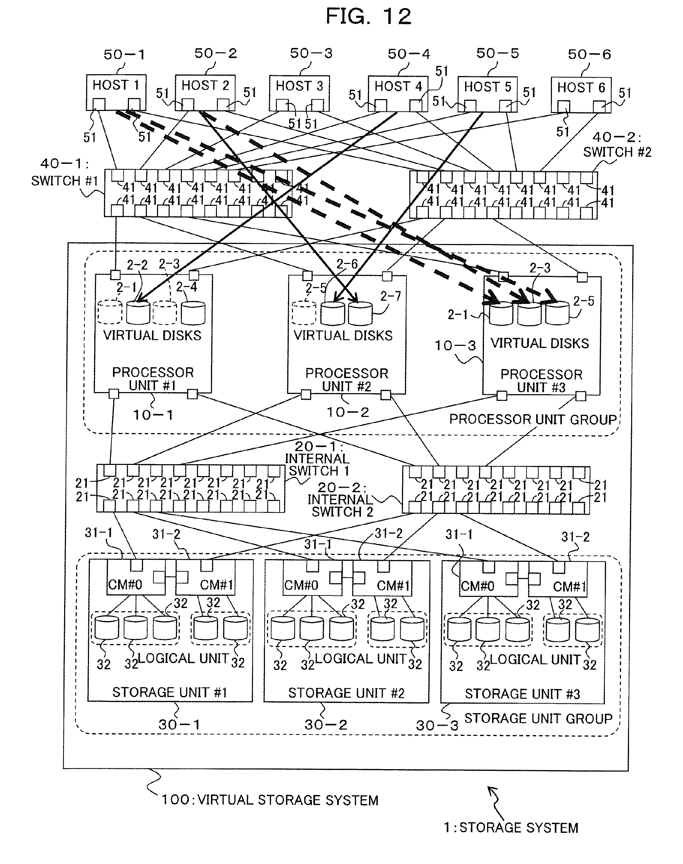

In the storage system 1 as an example of the embodiment configured as described above, the process performed at the time of additionally installing the processor unit 10 will be described along a flowchart (Steps B1 to B6) illustrated in FIG. 10 with reference to FIGS. 11 and 12. FIGS. 11 and 12 are diagrams that illustrate an exemplary state when the new processor unit #3 is additionally installed in the storage system 1 as an example of the embodiment. FIG. 11 is a diagram that illustrates a state before the new processor unit #3 is additionally installed, and FIG. 12 is a diagram that illustrates a state after the new processor unit #3 is additionally installed.

In the example illustrated in FIGS. 11 and 12, an example is illustrated in which a new processor unit #3 (new processor unit #3) is additionally installed to the virtual storage system 100 that includes the processor units #1 and #2.

In Step B1, the load information collecting unit 13 of the master processor unit 10-1 (processor unit #1) collects the iops/data transmission amount for each access path to each virtual volume 2 of each processor unit 10 from each host 50. The load information collecting unit 13 registers the iops/data transmission amount (load recording) collected from each processor unit 10 in the load recording information 102.

In the example illustrated in FIG. 11, the load information collecting unit 13 collects the iops/data transmission amount of each access path to each one of the virtual disks 2-1 to 2-7 of the processor units #1 and #2.

In Step B2, an operation of additionally installing a new processor unit #3 to this storage system 1 is performed. The detection unit 11 recognizes that this new processor unit #3 is additionally installed and adds the information (the target ID of the iSCSI and the like) to the management information.

In Step B3, the performance information collecting unit 14 collects performance scores by causing each one of the processor units #1 to #3 arranged inside the storage system 1 to execute the performance checking program. The collected performance scores are registered in the performance score information 101.

In Step B4, the selection unit 15 selects a virtual volume 2 to be moved to the new processor unit #3 from among the virtual volumes managed by each processor unit 10 based on the load recording information 102 generated by the load information collecting unit 13 and the performance score information 101 generated by the performance information collecting unit 14.

In the example illustrated in FIGS. 11 and 12, the virtual disks 2-1 and 2-3 of the processor unit #1 and the virtual disk 2-5 of the processor unit #2 are moved to the new processor unit #3.

In Step B5, the movement instruction unit 16 notifies the new processor unit #3 of the moving virtual disks 2 selected by the selection unit 15 and sets (moves) the virtual disks 2 to the new processor unit #3.

In Step B6, the transmission unit 12 transmits a path switching instruction for an instruction for setting an access path to the new processor unit #3 to the multi-path driver 52 of each host 50, as illustrated in FIG. 12, switches the access path to the virtual disk 2 of the new processor unit #3, and ends the process.

In this way, according to the storage system 1 as an example of the embodiment, in a case where a processor unit 10 is additionally installed in the scale-out type storage system 1, rearrangement of virtual disks 2 according to the processing performance of each processor unit 10 can be autonomously performed.

The selection unit 15 selects virtual volumes 2 to be moved to the new processor unit 10 from among virtual volumes managed by each processor unit 10 based on the load recording information 102 generated by the load information collecting unit 13 and the performance score information 101 generated by the performance information collecting unit 14. Accordingly, the virtual disks 2 to be moved to the new processor unit 10 can be easily selected in accordance with the processing performance of each processor unit 10.

In addition, when the selection unit 15 selects moving virtual disks 2, the virtual disks 2 are selected in the range in which a sum of the load recordings does not exceed the target load of the new processor unit 10 and the selected virtual disks 2 are determined as the moving virtual disks 2.

Accordingly, the occurrence of overload in the new processor unit 10 can be prevented, whereby a stable system operation can be performed.

In addition, when moving virtual disks 2 are selected, the selection unit 15 sequentially selects virtual disks 2 starting from a virtual disk 2 having larger values of the load recordings. Accordingly, the number of virtual disks 2 to be moved to the new processor unit 10 can be decreased, and a time and a load required for the process performed by the movement instruction unit 16 can be reduced.

By transmitting a path switching instruction to the multi-path driver 52 of the host 50 using the transmission unit 12, the switching of the access path to the virtual disk 2 moved to the new processor unit 10 that has been additionally installed in the host 50 can be realized without stopping the operation of the storage system 1.

Accordingly, even in a case where a plurality of hosts 50 are connected to the virtual storage system 100 so as to be used, the business of the host 50 is not influenced, and the degree of convenience is high.

(B) Modified Examples

The present invention is not limited to the embodiment described above, and various changes may be made therein in the range not departing from the concept of the present invention.

For example, in the embodiment described above, when the selection unit 15 selects moving virtual disks 2, by sequentially selecting virtual disks 2 starting from the virtual disk 2 having a largest value of the load recording, the number of virtual disks 2 moved to the new processor unit 10 is decreased. However, the present invention is not limited thereto.

In this modified example, the selection unit 15 selects virtual disks 2 to be moved to the new processor unit #3 such that the load of each processor unit 10 is smoothed in accordance with the processing performance of each processor unit 10.

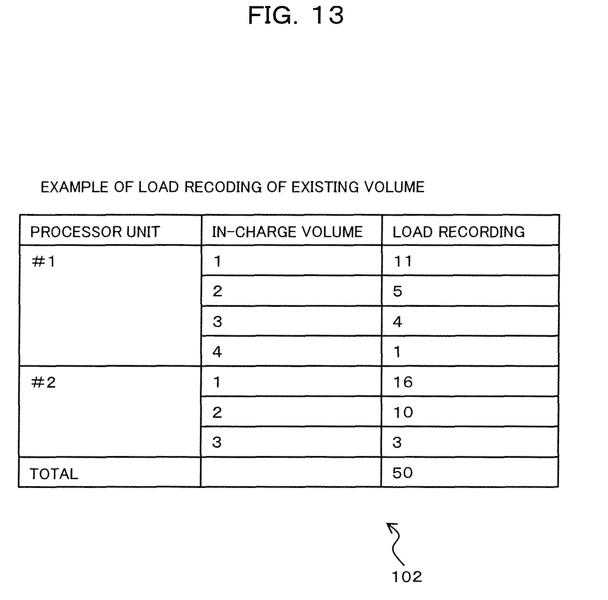

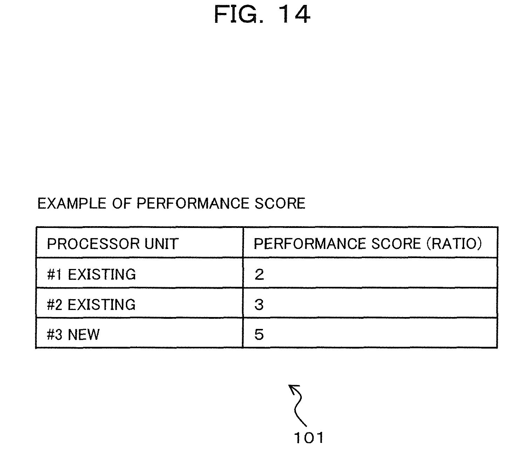

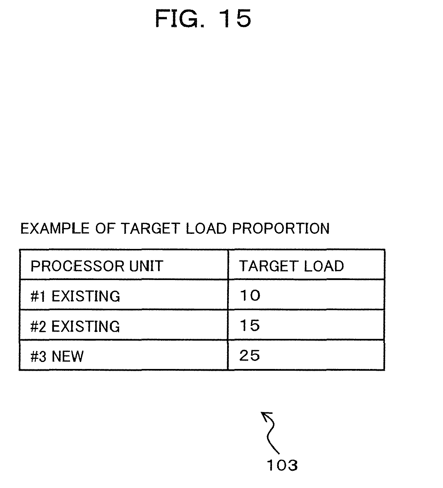

FIG. 13 is a diagram that illustrates exemplary load recording information 102 in the storage system 1 as a modified example of the embodiment. FIG. 14 is a diagram that illustrates exemplary performance score information 101 thereof, FIG. 15 is a diagram that illustrates exemplary target load information 103 thereof, and FIG. 16 is a diagram that illustrates an exemplary in-charge list 104 thereof.

In the load recording information 102, the performance score information 101, the target load information 103, and the in-charge list 104, while values different from those of the load recording information 102, the performance score information 101, the target load information 103, and the in-charge list 104 illustrated in FIGS. 4 to 7 are registered, the configurations thereof are the same as the configurations of those illustrated in FIGS. 4 to 7.

In addition, the performance score information 101 illustrated in FIG. 14 is different from the performance score information 101 illustrated in FIG. 5 and represents the values of the performance scores of all the processor units #1 to #3 arranged inside the storage system 1 including the new processor unit #3 as a simple ratio. However, this performance score information 101, similar to the score information 101 illustrated in FIG. 5, may be represented as a ratio with respect to one of the processor units 10 (for example, the processor unit #1) as a reference.

In the storage system 1 as this modified example, by distributing a sum value (50 in the example illustrated in FIG. 13) of the load recordings of existing virtual volumes 2 included in the load recording information 102 in accordance with the performance information of all the processor units 10 including the new processor unit #3, the selection unit 15 determines the target load of each processor unit 10. The selection unit 15 registers the determined target load of each processor unit 10 in the target load information 103.

In addition, the selection unit 15 selects virtual disks 2 to be moved to the new processor unit #3 by referring to the load recording information 102 and the target load information 103 described above.

More specifically, for example, the selection unit 15 allocates the virtual disks 2 by using the in-charge list 104 as illustrated in FIG. 16.

In the example illustrated in FIG. 16, it is represented that the new processor unit #3 is in charge of the virtual disks 2 of the in-charge volumes 2, 3, and 4 of the processor unit #1 and the in-charge volumes 2 and 3 of the processor unit #2 out of a plurality of virtual disks 2 illustrated in FIG. 13.

In other words, it is represented that the virtual disks 2 of the in-charge volumes 2, 3, and 4 of the processor unit #1 and the in-charge volumes 2 and 3 of the processor unit #2 are selected as the moving virtual disks 2 to be moved to the processor unit #3.

Also in the initial state of this in-charge list 104, to each virtual disk 2, information (a flag or the like) indicating that a processor unit (in-charge processor unit) 10 that is in charge of the virtual disk 2 has not been determined is set (not illustrated in the figure). In addition, in the in-charge list 104 that is in the initial state, as a newly allocated processor unit corresponding to each virtual disk, the original processor unit 10 that manages the virtual disk 2 is registered.

The selection unit 15 selects one having a smallest value of the load recoding out of virtual disks 2 for which an in-charge processor unit 10 has not been determined in the in-charge list 104 and determines whether or not the selected virtual disk 2 is allocatable to the new processor unit 10.

More specifically, the selection unit 15, for the processor units 10 to which the selected virtual disks 2 are allocated, checks whether or not a sum of the load recordings of the remaining virtual disks 2 after excluding the selected virtual disks 2 is less than the target load of the processor unit 10.

In a case where the sum of the load recordings of the remaining virtual disks 2 after excluding the selected virtual disks 2 is not less than the target load of the processor unit 10, the selection unit 15 determines that the selected virtual disks 2 is allocatable to the new processor unit #3. On the other hand, in a case where the sum of the load recordings of the remaining virtual disks 2 after excluding the selected virtual disks 2 is less than the target load of the processor unit 10, the selection unit 15 does not change the in-charge processor units so as to allow the original processor units #1 and #2 to be in charge of the selected virtual disks 2.

In this way, the selection unit 15, for the existing processor units #1 and #2, calculates the sum of the load recordings of the remaining virtual disks 2 after excluding the virtual disks 2 selected as the moving virtual disks 2. Then, the selection unit 15 selects the moving virtual disks 2 in the range in which the sum of the load recordings of the remaining virtual disks 2 after excluding the virtual disks 2 selected as the moving virtual disks 2 is not less than each one of the target loads of the processor units #1 and #2 that are movement sources.

In other words, the selection unit 15 selects the moving virtual disks 2 in a range in which the sum of the load recordings of the virtual disks 2 acquired by excluding the virtual disks 2 selected as the moving virtual disks 2 does not exceed the target load of the original processor unit 10.

At this time, the selection unit 15 sequentially selects virtual disks 2 starting from the virtual disk 2 having a smallest value of the load recording by referring to the load recording information 102 and determines whether or not a sum value of the remaining virtual disks 2 after excluding the selected virtual disks 2 is not less than the target load of the existing processor unit 10.

By sequentially selecting virtual disks 2 starting from the virtual disk 2 having a smallest value of the load recording, the sum of the load recordings of the virtual disks 2 of the existing processor units 10 may be brought near the target load of the processor units 10, which can contribute to the smoothing of the loads.

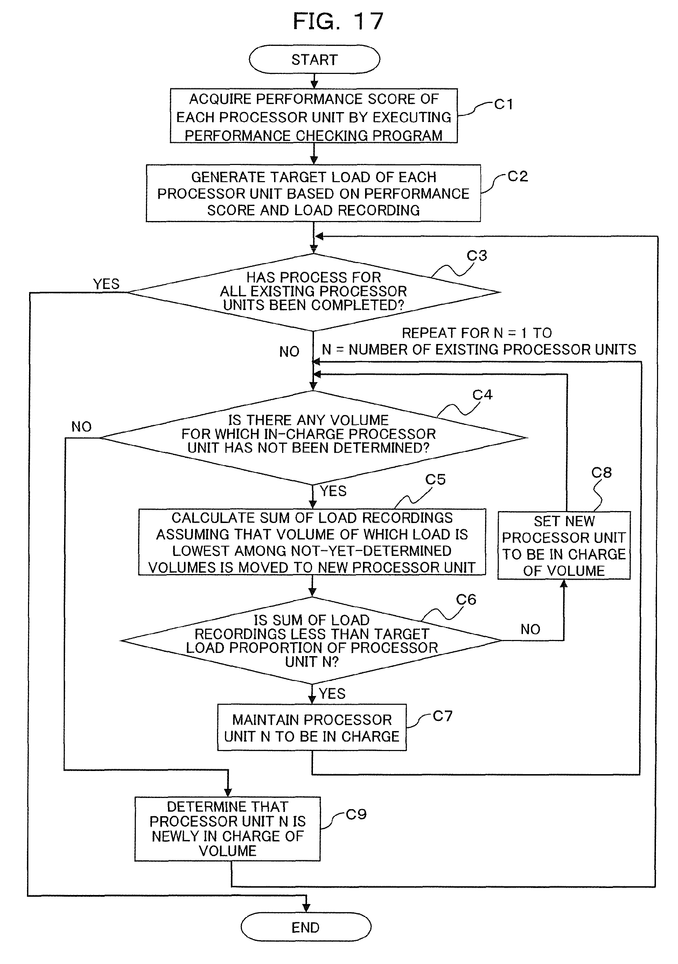

Here, the method of determining the moving virtual disks 2 in the storage system 1 as the modified example of the embodiment will be described along a flowchart (Steps C1 to C9) represented in FIG. 17. Here, as illustrated in FIG. 1, an example will be described in which a new processor unit #3 is additionally installed in the storage system 1 including the processor units #1 and #2.

In Step C1, the performance information collecting unit 14 acquires a performance score of each processor unit 10 by causing each processor unit 10 to execute the performance checking program. The performance information collecting unit 14 generates performance score information 101 based on the collected performance scores.

Subsequently, in Step C2, the performance information collecting unit 14 generates the target load information 103 based on the generated performance score information 101 and the load recording information 102 generated by the load information collecting unit 13.

Then, in Step C3, the selection unit 15 checks whether or not the process of selecting moving virtual disks 2 has been performed for all the existing processor units 10. Here, in a case where the process of selecting moving virtual disks 2 has been performed for all the existing processor units 10 (see the route of YES in Step C3), the process ends.

On the other hand, in a case where the process of selecting moving virtual disks 2 has not been performed for all the existing processor units 10 (see the route of NO in Step C3), the following process of Steps C4 to C9 is performed.

The process of Steps C4 to C9 is repeatedly performed for the number of times corresponding to the number (N) of all the existing processor units 10.

In Step C4, the selection unit 15 checks whether or not there is a virtual disk (volume) 2 of which the in-charge processor unit 10 has not been determined by referring to the in-charge list 104.

In a case where there is a virtual disk 2 of which the in-charge processor unit 10 has not been determined (see the route of YES in Step C4), in Step C5, a virtual disk 2 having a smallest load recording is selected as a moving candidate from among the virtual disks 2 of which the in-charge processor unit 10 has not been determined. Then, the selection unit 15 assumes that the virtual disks 2 of the selected moving candidate are moved to the new processor unit 10 and calculates a sum of the load recordings of the remaining virtual disks 2 of the existing processor units 10 that are the movement sources.

Then, in Step C6, the sum of the load recordings of the remaining virtual disks 2 of the existing processor units 10 that are the movement sources is compared with the target load of the processor unit 10. In a case where the sum of the load recordings of the remaining virtual disks 2 of the existing processor units 10 that are the movement sources is not less than the target load of the processor unit 10 (see the route of NO in Step C6), in Step C8, it is determined that the new processor unit 10 is in charge of the virtual disks 2 of the moving candidate. Thereafter, the process is returned to Step C4.

On the other hand, in a case where the sum of the load recordings of the remaining virtual disks 2 of the existing processor units 10 that are the movement sources is less than the target load of the processor unit 10 (see the route of YES in Step C6), in Step C7, the processor unit 10 that is in charge of the virtual disks 2 of the moving candidate is not changed. In other words, the original processor unit 10 is maintained to be in charge of the virtual disks 2 of the moving candidate. Thereafter, the process is returned to Step C4.

Then, when there is no virtual disk 2 of which the in-charge processor unit 10 has not been determined (see the route of NO in Step C4), in Step C9, the virtual disks 2 of which the existing processor units 10 are in charge are determined. Thereafter, N is incremented, and the process moves to the next existing processor unit 10 and is returned to Step C3.

For example, in the example illustrated in FIGS. 13 and 16, when the virtual disks 2 are aligned starting from a virtual disk having a smallest load recording for each processor unit 10, the following arrangement is formed.

In other words, in the processor unit #1, the arrangement of the in-charge volume 4 (load recording of 1), the in-charge volume 3 (load recording of 4), the in-charge volume 2 (load recording of 5), and the in-charge volume 1 (load recording of 11) is formed.

In addition, in the processor unit #2, the arrangement of the in-charge volume 3 (load recording of 3), the in-charge volume 2 (load recording of 10), and the in-charge volume 1 (load recording of 16) is formed.

In the example illustrated in FIG. 15, the target loads of the existing processor units #1 and #2 are 10 and 15.

According to the technique represented in the flowchart illustrated in FIG. 17, first, for the processor unit #1, a sum of the load recordings of the remaining in-charge volumes of a case where the new processor unit #3 is in charge of the in-charge volume 4 (load recording of 1) is calculated. At this time point, the sum of the load recordings is 4 + 5 + 11 = 20 and is not less than the target load of the processor unit #1 which is 10. Accordingly, it is determined that the new processor unit #3 is in charge of the in-charge volume 4.

Subsequently, the sum of the load recordings of the remaining in-charge volumes of a case where the new processor unit #3 is in charge of the in-charge volume 3 (load recording of 4) is 5 + 11 = 16 and is not less than the target load of the processor unit #1 which is 10. Accordingly, it is determined that the new processor unit #3 is in charge of the in-charge volume 3 as well.

In addition, the sum of the load recordings of the remaining in-charge volumes of a case where the new processor unit #3 is in charge of the in-charge volume 2 (load recording of 5) is 11 and is not less than the target load of the processor unit #1 which is 10. Accordingly, it is determined that the new processor unit #3 is in charge of the in-charge volume 2 as well.

However, the sum of the load recordings of the remaining in-charge volumes of a case where the new processor unit #3 is in charge of the in-charge volume 1 (load recording of 11) is 0 and is less than the target load of the processor unit #1 which is 10. Accordingly, it is determined that the original processor unit #1 is maintained to be in charge of the in-charge volume 1.

Next, similarly, for the processor unit #2, a sum of the loading recordings of the remaining in-charge volumes of a case where the new processor unit #3 is in charge of the in-charge volume 3 (load recording of 3) is calculated. At this time point, the sum of the load recordings is 10 + 16 = 26 and is not less than the target load of the processor unit #2 which is 15. Accordingly, it is determined that the new processor unit #3 is in charge of the in-charge volume 3.

Subsequently, the sum of the load recordings of the remaining in-charge volumes of a case where the new processor unit #3 is in charge of the in-charge volume 2 (load recording of 10) is 16 and is not less than the target load of the processor unit #2 which is 15. Accordingly, it is determined that the new processor unit #3 is in charge of the in-charge volume 2 as well.

However, the sum of the load recordings of the remaining in-charge volumes of a case where the new processor unit #3 is in charge of the in-charge volume 1 (load recording of 16) is 0 and is less than the target load of the processor unit #2 which is 15. Accordingly, it is determined that the original processor unit #2 is maintained to be in charge of the in-charge volume 1.

According to the process described above, as illustrated in FIG. 16, as in-charge volumes of the new processor unit #3, the in-charge volumes 2 to 4 of the processor unit #1 and the in-charge volumes 2 and 3 of the processor unit #2 are determined.

In this way, according to the storage system 1 as a modified example of the embodiment, similar to the embodiment described above, in a case where a processor unit 10 is additionally installed in the scale-out type storage system 1, rearrangement of virtual disks 2 according to the processing performance of each processor unit 10 can be autonomously performed.

In addition, the selection unit 15 selects virtual volumes 2 to be moved to the new processor unit 10 from among virtual volumes managed by each processor unit 10 based on the load recording information 102 generated by the load information collecting unit 13 and the performance score information 101 generated by the performance information collecting unit 14. Accordingly, the virtual disks 2 to be moved to the new processor unit 10 can be easily selected in accordance with the processing performance of each processor unit 10.

Furthermore, by transmitting a path switching instruction to the multi-path driver 52 of the host 50 using the transmission unit 12, the switching of the access path to the virtual disk 2 moved to the new processor unit 10 that has been additionally installed in the host 50 can be realized without stopping the operation of the storage system 1.

Accordingly, even in a case where a plurality of hosts 50 are connected to the virtual storage system 100 so as to be used, the business of the host 50 is not influenced, and the degree of convenience is high.

Then, when a moving virtual disk 2 is selected, in a case where the sum of the load recordings of the remaining virtual disks 2 of the existing processor units 10 that are the movement sources is not less than the target load of the processor unit 10, the selection unit 15 determines the virtual disk 2 of the moving candidate as the moving virtual disk 2 of which the new processor unit 10 is in charge.

Accordingly, the sum of the load recordings of the virtual disks 2 of the processor unit 10 that is the movement source is maintained at the target load of the processor unit 10, whereby the loads of the plurality of processor units 10 can be smoothed.

In addition, when moving virtual disks 2 are selected, the selection unit 15 sequentially selects the virtual disks starting from a virtual disk 2 having a lowest value of the load recording. Accordingly, the moving virtual disks 2 can be efficiently selected.

(C) Others

In the above-described embodiment and the modified example thereof, while the example has been illustrated in which the processor unit 10 managing virtual disks 2 is additionally installed in the storage system 1, the present invention is not limited thereto, and various changes may be made therein. For example, in a case where a new computer is additionally installed in a multi-node system including a plurality of computers (nodes), the present invention may be applied to the rearrangement of processes performed in the nodes.

For example, the load information collecting unit 13 collects the load information (for example, a delay time relating to a predicted processing time) relating to processes distributed in the nodes, and the performance information collecting unit 14 collects the performance score (performance information) that represents the processor performance or the input/output processing performance of each server computer.

The selection unit 15 selects processes of which the processing is moved to a new computer that is additionally installed from the existing computers based on the load information and the performance information. The transmission unit 12 notifies hosts connected to the multi-node system of information relating to the processes moved to the new computer.

In addition, in the above-described embodiment and the modified example thereof, while the example has been represented in which the new processor unit 10-3 is additionally installed in the storage system 1 including two processor units 10-1 and 10-2, however, the present invention is not limited thereto. In other words, a processor unit 10 may be additionally installed in a storage system 1 including three or more processor units 10 or one processor unit 10, and, at this time, two or more processor units 10 may be additionally installed.

Furthermore, in the above-described embodiment and the modified example thereof, while the four virtual disks 2-1 to 2-4 are included in the processor unit 10-1, and the three virtual disks 2-5 to 2-7 are included in the processor unit 10-2, the present invention is not limited thereto. In other words, the number of the virtual disks 2 included in each processor unit 10 may be appropriately changed.

In addition, in the above-described embodiment and the modified example thereof, while the hosts 50-1 to 50-6 are included, the present invention is not limited thereto. In other words, five or less or seven or more hosts 50 may be configured to be included. Similarly, the number of the storage units 30 and the number of the storage devices 32 included in each storage unit may be variously changed.

Furthermore, in the above-described embodiment and the modified example thereof, while the load information collecting unit 13 uses the iops/data transmission amount as the load information for each access path, the present invention is not limited thereto. In other words, information other than the iops/data transmission amount may be used as the performance index of the storage device.

Based on the disclosure described above, the embodiment can be performed and manufactured by those skilled in the art.

**Claims**

1.  A control system comprising:

    a superordinate apparatus (50) that includes a multi-path driver (52) controlling an access path; and
    a second control unit (10-1) that transmits a control signal used for an instruction for setting an access path to a first control unit (10-3) that is newly connected to be communicable with the superordinate apparatus (50) to the superordinate apparatus (50),
    wherein the multi-path driver (52) sets the access path to the first control unit (10-3) based on the control signal supplied from the second control unit (10-1).

2.  The control system according to claim 1, wherein the second control unit (10-1) transmits the control signal used for the instruction for setting the access path to the first control unit (10-3) to the superordinate apparatus (50) in a case where the first control unit (10-3) is recognized.

3.  The control system according to claim 1 or 2, further comprising one or more third control units (10-1 and 10-2) that manage a plurality of virtual volumes (2),
    wherein the second control unit (10-1) includes:

    a load information collecting unit (13) that collects load information for each access path from the superordinate apparatus (50) to the virtual volume (2) in the third control units (10-1 and 10-2);
    a performance information collecting unit (14) that collects performance information of the third control units (10-1 and 10-2) and the first control unit (10-3) in a case where the first control unit (10-3) is recognized;
    a selection unit (15) that selects a moving virtual volume (2) to be moved to the first control unit (10-3) from among the virtual volumes (2) managed by the third control units (10-1 and 10-2) based on the performance information; and
    a movement instruction unit (16) that moves the moving virtual volume (2) selected by the selection unit (15) to the first control unit (10-3).

4.  The control system according to claim 3, wherein the selection unit (15) determines target loads of the third control units (10-1 and 10-2) and the first control unit (10-3) in accordance with the performance information of the third control units (10-1 and 10-2) and the first control unit (10-3) and selects the virtual volume (2) as the moving virtual volume (2) in the descending order of the loads of the virtual volumes (2) from among the plurality of the virtual volumes (2) in a range for which a sum of the load information of the selected virtual volumes (2) does not exceed the target load of the first control unit (10-3) based on the load information.

5.  The control system according to claim 3, wherein the selection unit (15) determines target loads of the third control units (10-1 and 10-2) and the first control unit (10-3) in accordance with the performance information of the third control units (10-1 and 10-2) and the first control unit (10-3) and, based on the load information, selects one or more of the moving virtual volumes (2) in a range for which a sum of the load information of remaining virtual volumes (2) acquired by excluding the virtual volumes (2) selected as the moving virtual volumes (2) is not less than the target load of the third control units (10-1 and 10-2) of movement sources in the third control units (10-1 and 10-2) of the movement sources of the moving virtual volumes (2).

6.  A control apparatus comprising:

    a communication unit (110) that communicates with a superordinate apparatus (50) including a multi-path driver (52) that controls an access path; and
    a transmission unit (12) that transmits a control signal used for an instruction for setting an access path to a first control unit (10-3) that is newly connected to be communicable with the superordinate apparatus (50) to the superordinate apparatus (50).

7. The control apparatus according to claim 6, wherein the transmission unit (12) transmits the control signal used for the instruction for setting the access path to the first control unit (10-3) to the superordinate apparatus (50) in a case where the first control unit (10-3) is recognized.

8. The control apparatus according to claim 6 or 7, further comprising:

a load information collecting unit (13) that collects load information for each access path from the superordinate apparatus (50) to the virtual volume (2) in one or more third control units (10-1 and 10-2) that manage a plurality of virtual volumes (2);
a performance information collecting unit (14) that collects performance information of the third control units (10-1 and 10-2) and the first control unit (10-3) in a case where the first control unit (10-3) is recognized;
a selection unit (15) that selects a moving virtual volume (2) to be moved to the first control unit (10-3) from among the virtual volumes (2) managed by the third control units (10-1 and 10-2) based on the performance information; and
a movement instruction unit (16) that moves the moving virtual volume (2) selected by the selection unit (15) to the first control unit (10-3).

9. The control apparatus according to claim 8, wherein the selection unit (15) determines target loads of the third control units (10-1 and 10-2) and the first control unit (10-3) in accordance with the performance information of the third control units (10-1 and 10-2) and the first control unit (10-3) and selects the virtual volume (2) as the moving virtual volume (2) in the descending order of the loads of the virtual volumes (2) from among the plurality of the virtual volumes (2) in a range for which a sum of the load information of the selected virtual volumes (2) does not exceed the target load of the first control unit (10-3) based on the load information.

10. The control apparatus according to claim 8, wherein the selection unit (15) determines the target loads of the third control units (10-1 and 10-2) and the first control unit (10-3) in accordance with the performance information of the third control units (10-1 and 10-2) and the first control unit (10-3) and, based on the load information, selects one or more of the moving virtual volumes (2) in a range for which a sum of the load information of remaining virtual volumes (2) acquired by excluding the virtual volumes (2) selected as the moving virtual volumes (2) is not less than the target load of the third control units (10-1 and 10-2) of movement sources in the third control units (10-1 and 10-2) of the movement sources of the moving virtual volumes (2).

11. A control program causing a computer that is communicable with a superordinate apparatus (50) including a multi-path driver (52) controlling an access path to perform: transmitting a control signal used for an instruction for setting an access path to a first control unit (10-3) that is newly connected to be communicable with the superordinate apparatus (50) to the superordinate apparatus (50).

12. The control program according to claim 11, wherein the computer is caused to perform transmitting the control signal used for the instruction for setting the access path to the first control unit (10-3) to the superordinate apparatus (50) in a case where the first control unit (10-3) is recognized.

13. The control program according to claim 11 or 12, wherein the computer is caused to perform:

collecting load information for each access path from the superordinate apparatus (50) to the virtual volume (2) in one or more third control units (10-1 and 10-2) that manage a plurality of virtual volumes (2);
collecting performance information of the third control units (10-1 and 10-2) and the first control unit (10-3) in a case where the first control unit (10-3) is newly connected;
selecting a moving virtual volume (2) to be moved to the first control unit (10-3) from among the virtual volumes (2) managed by the third control units (10-1 and 10-2) based on the performance information; and
moving the selected moving virtual volume (2) to the first control unit (10-3).

14. The control program according to claim 13, wherein the computer is caused to perform: determining target loads of the third control units (10-1 and 10-2) and the first control unit (10-3) in accordance with the performance information of the third control units (10-1 and 10-2) and the first control unit (10-3) and selecting the virtual volume (2) as the moving virtual volume (2) in the descending order of the loads of the virtual volumes (2) from among the plurality of the virtual volumes (2) in a range for which a sum of the load information of the selected virtual volumes (2) does not exceed the target load of the first control unit (10-3) based on the load information.

15. The control program according to claim 13, wherein the computer is caused to perform: determining the target loads of the third control units (10-1 and 10-2) and the first control unit (10-3) in accordance with the performance information of the third control units (10-1 and 10-2) and the first control unit (10-3) and, based on the load information, selecting one or more of the moving virtual volumes (2) in a range for which a sum of the load information of remaining virtual volumes (2) acquired by excluding the virtual volumes (2) selected as the moving virtual volumes (2) is not less than the target load of the third control units (10-1 and 10-2) of movement sources in the third control units (10-1 and 10-2) of the movement sources of the moving virtual volumes (2).

## FIG. 1

# FIG. 2

100 : VIRTUAL STORAGE SYSTEM

1 : STORAGE SYSTEM

# FIG. 3

PROCESSOR UNIT

HOST I/F — 110
HOST I/F — 110
LAN I/F — 112

10-1~10-3(10)

CPU — 114

MEMORY — 1150

FIRMWARE

1151 DATA ACCESS CONTROL UNIT

PERFORMANCE SCORE INFORMATION — 101

1152 DATA STORAGE CONTROL UNIT

LOAD RECODING INFORMATION — 102

1153 UNIT MANAGING UNIT

TARGET LOAD INFORMATION — 103

1154 OS

IN-CHARGE LIST — 104

STORAGE DEVICE — 116

115

STORAGE I/F — 111
STORAGE I/F — 111

EP 2 796 984 A1

# FIG. 4

EXAMPLE OF LOAD RECODING OF EXISTING VOLUME

| PROCESSOR UNIT | IN-CHARGE VOLUME | LOAD RECORDING |
|---|---|---|
| #1 | 1 | 12 |
| | 2 | 8 |
| | 3 | 2 |
| | 4 | 1 |
| #2 | 1 | 15 |
| | 2 | 9 |
| | 3 | 3 |
| TOTAL | | 50 |

102

# FIG. 5

EXAMPLE OF PERFORMANCE SCORE

| PROCESSOR UNIT | PERFORMANCE SCORE (RATIO) |
|---|---|
| #1 EXISTING | 1 |
| #2 EXISTING | 3 |
| #3 NEW | 6 |

101

# FIG. 6

EXAMPLE OF TARGET LOAD PROPORTION

| PROCESSOR UNIT | TARGET LOAD |
|---|---|
| #1 EXISTING | 5 |
| #2 EXISTING | 15 |
| #3 NEW | 30 |

103

FIG. 7

| PROCESSOR UNIT | IN-CHARGE VOLUME | LOAD RECORDING | NEWLY ALLOCATED PROCESSOR UNIT |
|---|---|---|---|
| #1 | 1 | 12 | #3 |
| | 2 | 8 | #1 |
| | 3 | 2 | #3 |
| | 4 | 1 | #1 |
| #2 | 1 | 15 | #3 |
| | 2 | 9 | #2 |
| | 3 | 3 | #2 |

104

# FIG. 8

START

ACQUIRE PERFORMANCE SCORE
OF EACH PROCESSOR UNIT BY
EXECUTING PERFORMANCE
CHECKING PROGRAM ⟶ A1

GENERATE TARGET LOAD OF
EACH PROCESSOR UNIT BASED
ON PERFORMANCE SCORE AND
LOAD RECORDING ⟶ A2

A3
IS THERE ANY VOLUME
FOR WHICH IN-CHARGE
PROCESSOR UNIT HAS NOT
BEEN DETERMINED?

NO

YES

A4
CALCULATE SUM OF LOAD RECORDINGS
ASSUMING THAT VOLUME OF WHICH LOAD
IS HIGHEST AMONG NOT-YET-
DETERMINED VOLUMES IS MOVED
TO NEW PROCESSOR UNIT

A5
IS SUM OF LOAD
RECORDINGS TARGET LOAD
OF NEW PROCESSOR UNIT
OR MORE?

NO

A7
SET NEW PROCESSOR
UNIT TO BE IN CHARGE
OF VOLUME

YES

MAINTAIN ORIGINAL
PROCESSOR UNIT TO
BE IN CHARGE ⟶ A6

END

EP 2 796 984 A1

FIG. 9

27

# FIG. 10

```
                    START

B1   COLLECT LOAD INFORMATION AND
     GENERATE MANAGEMENT INFORMATION

B2   NEWLY ADD PROCESSING UNIT

B3   COLLECT PERFORMANCE INFORMATION

B4   DETERMINE VIRTUAL VOLUME TO BE
     MOVED

B5   MOVE VIRTUAL VOLUME

B6   PERFORM PATH SWITCHING

                    END
```

# FIG. 11

100 : VIRTUAL STORAGE SYSTEM

1 : STORAGE SYSTEM

# FIG. 12

100: VIRTUAL STORAGE SYSTEM

1: STORAGE SYSTEM

# FIG. 13

EXAMPLE OF LOAD RECODING OF EXISTING VOLUME

| PROCESSOR UNIT | IN-CHARGE VOLUME | LOAD RECORDING |
|---|---|---|
| #1 | 1 | 11 |
|  | 2 | 5 |
|  | 3 | 4 |
|  | 4 | 1 |
| #2 | 1 | 16 |
|  | 2 | 10 |
|  | 3 | 3 |
| TOTAL |  | 50 |

102

# FIG. 14

EXAMPLE OF PERFORMANCE SCORE

| PROCESSOR UNIT | PERFORMANCE SCORE (RATIO) |
|---|---|
| #1 EXISTING | 2 |
| #2 EXISTING | 3 |
| #3 NEW | 5 |

101

# FIG. 15

EXAMPLE OF TARGET LOAD PROPORTION

| PROCESSOR UNIT | TARGET LOAD |
|----------------|-------------|
| #1 EXISTING | 10 |
| #2 EXISTING | 15 |
| #3 NEW | 25 |

103

# FIG. 16

| PROCESSOR UNIT | IN-CHARGE VOLUME | LOAD RECORDING | NEWLY ALLOCATED PROCESSOR UNIT |
|---|---|---|---|
| #1 | 1 | 11 | #1 |
| | 2 | 5 | #3 |
| | 3 | 4 | #3 |
| | 4 | 1 | #3 |
| #2 | 1 | 16 | #2 |
| | 2 | 10 | #3 |
| | 3 | 3 | #3 |

104

# FIG. 17

```
                    ( START )
                        │
                        ▼
        ┌──────────────────────────────────┐
        │  ACQUIRE PERFORMANCE SCORE OF     │──C1
        │  EACH PROCESSOR UNIT BY EXECUTING │
        │  PERFORMANCE CHECKING PROGRAM     │
        └──────────────────────────────────┘
                        │
                        ▼
        ┌──────────────────────────────────┐
        │  GENERATE TARGET LOAD OF EACH     │──C2
        │  PROCESSOR UNIT BASED ON PERFORMANCE│
        │  SCORE AND LOAD RECORDING         │
        └──────────────────────────────────┘
                        │
                        ▼
```

HAS PROCESS FOR ALL EXISTING PROCESSOR UNITS BEEN COMPLETED? ──C3

YES    NO

REPEAT FOR N = 1 TO N = NUMBER OF EXISTING PROCESSOR UNITS

IS THERE ANY VOLUME FOR WHICH IN-CHARGE PROCESSOR UNIT HAS NOT BEEN DETERMINED? ──C4

NO    YES

CALCULATE SUM OF LOAD RECORDINGS ASSUMING THAT VOLUME OF WHICH LOAD IS LOWEST AMONG NOT-YET-DETERMINED VOLUMES IS MOVED TO NEW PROCESSOR UNIT ──C5

SET NEW PROCESSOR UNIT TO BE IN CHARGE OF VOLUME ──C8

IS SUM OF LOAD RECORDINGS LESS THAN TARGET LOAD PROPORTION OF PROCESSOR UNIT N? ──C6

NO    YES

MAINTAIN PROCESSOR UNIT N TO BE IN CHARGE ──C7

DETERMINE THAT PROCESSOR UNIT N IS NEWLY IN CHARGE OF VOLUME ──C9

( END )

Europäisches
Patentamt

European
Patent Office

Office européen
des brevets

# EUROPEAN SEARCH REPORT

**Application Number**

EP 14 16 5383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 727 033 A1 (HITACHI LTD) 29 November 2006 (2006-11-29) * figures 2,13,18 * * paragraph [0167] - paragraph [0178] * * paragraph [0208] - paragraph [0224] * ----- | 1-15 | INV. G06F3/06 |
| A | EP 2 120 138 A2 (HITACHI LTD [JP]) 18 November 2009 (2009-11-18) * figures 1,24 * * paragraph [0185] - paragraph [0209] * ----- | 1-15 | |

TECHNICAL FIELDS
SEARCHED      (IPC)

G06F
H04L

The present search report has been drawn up for all claims

| Place of search | Date of completion of the search | Examiner |
|---|---|---|
| The Hague | 9 September 2014 | Alliot, Sylvain |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 14 16 5383

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2014

| Patent document cited in search report | | Publication date | Patent family member(s) | | Publication date |
|---|---|---|---|---|---|
| EP 1727033 | A1 | 29-11-2006 | CN | 1869914 A | 29-11-2006 |
| | | | CN | 101271382 A | 24-09-2008 |
| | | | EP | 1727033 A1 | 29-11-2006 |
| | | | EP | 2246777 A2 | 03-11-2010 |
| | | | JP | 5057656 B2 | 24-10-2012 |
| | | | JP | 2006330895 A | 07-12-2006 |
| | | | US | 2006271758 A1 | 30-11-2006 |
| | | | US | 2009150608 A1 | 11-06-2009 |
| | | | US | 2010274963 A1 | 28-10-2010 |
| | | | US | 2011314250 A1 | 22-12-2011 |
| | | | US | 2013275690 A1 | 17-10-2013 |
| EP 2120138 | A2 | 18-11-2009 | EP | 2120138 A2 | 18-11-2009 |
| | | | JP | 2009277211 A | 26-11-2009 |
| | | | US | 2009287898 A1 | 19-11-2009 |

EPO FORM P0459

For more details about this annex : see Official Journal of the European Patent Office, No. 12/82

**EP 2 796 984 A1**

**Patent documents cited in the description**

- JP 2005050303 A

- JP 2008269338 A